(19) **Europäisches Patentamt / European Patent Office / Office européen des brevets**

(11) **EP 2 909 656 B1**

(12) **EUROPEAN PATENT SPECIFICATION**

(45) Date of publication and mention
of the grant of the patent:
**07.03.2018 Bulletin 2018/10**

(21) Application number: **12887717.2**

(22) Date of filing: **31.10.2012**

(51) Int Cl.:
*G01V 1/40* (2006.01)      *E21B 44/00* (2006.01)

(86) International application number:
**PCT/US2012/062658**

(87) International publication number:
**WO 2014/070150 (08.05.2014 Gazette 2014/19)**

(54) **SYSTEM, METHOD AND COMPUTER PROGRAM PRODUCT FOR MULTIVARIATE STATISTICAL VALIDATION OF WELL TREATMENT AND STIMULATION DATA**

SYSTEM, VERFAHREN UND COMPUTERPROGRAMMPRODUKT ZUR MULTIVARIATEN STATISTISCHEN VALIDIERUNG VON BOHRLOCHBEHANDLUNGS- UND STIMULATIONSDATEN

SYSTÈME, PROCÉDÉ ET PRODUIT PROGRAMME D'ORDINATEUR POUR UNE VALIDATION STATISTIQUE À VARIABLES MULTIPLES DE DONNÉES DE TRAITEMENT ET DE STIMULATION DE PUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2015 Bulletin 2015/35**

(73) Proprietor: **Landmark Graphics Corporation Houston, Texas 77042 (US)**

(72) Inventors:
• **MAUCEC, Marko**
  **Englewood, Colorado 80111 (US)**
• **BHATTACHARYA, Srimoyee**
  **Houston, Texas 77077 (US)**
• **YARUS, Jeffrey Marc**
  **Houston, Texas 77096 (US)**

• **FULTON, Dwight David**
  **Cypress, Texas 77429 (US)**
• **SINGH, Ajay Pratap**
  **Houston, Texas 77054 (US)**

(74) Representative: **Jennings, Michael John et al**
**A.A. Thornton & Co.**
**10 Old Bailey**
**London EC4M 7NG (GB)**

(56) References cited:
| | |
|---|---|
| EP-A1- 0 354 716 | WO-A1-2009/018462 |
| WO-A2-2013/188241 | US-A1- 2007 112 521 |
| US-A1- 2009 037 111 | US-A1- 2012 123 756 |
| US-A1- 2012 123 756 | US-B1- 6 295 504 |
| US-B2- 7 577 527 | |

**Description**

**FIELD OF THE INVENTION**

The present invention relates generally to data mining and analysis and, more specifically, to a system which integrates and analyzes hydrocarbon well data from available databases to provide valuable insight into production enhancement and well stimulation/completion.

**BACKGROUND**

Over the past decade, data relating to hydrocarbon exploration has been compiled into various databases. The data compilations include general well and job information, job level data, pumping data, as well as wellbore and completion data. There are software platforms available to search those databases to locate existing jobs in a particular location and retrieve certain information related to those jobs.

However, to date, those platforms lack an automated, efficient and statistically rigorous decision making algorithm that searches data for patterns which may be used to evaluate an aspect of a well, such as well performance. It would be desirable to provide an analytical platform or system that could be utilized to, among other things, (1) evaluate the effectiveness of previous well treatments; (2) quantify the characteristics which made those treatments effective; (3) identify anomalously good or bad wells; (4) determine what factors contributed to the differences; (5) determine if the treatment program can be improved; (6) determine if the analysis can be automated; or (7) determine how to best use available data that contains both categorical and continuous variables along with the missing values.

2012/0123756 A1 discloses a method for controlling drilling operations by using a statistical model to identify at least two controllable drilling parameters having significant correlation to one or more drilling performance measurements. The operational recommendations are selected to optimize one or more drilling performance measurements.

In view of the foregoing, there is a need in the art for a system which meets those deficiencies by analyzing hydrocarbon well-related data in order to determine those data variables which best indicate or predict well performance.

**BRIEF DESCRIPTION OF THE DRAWINGS**

FIG. 1 illustrates a block diagram of a well data mining and analysis system according to an exemplary embodiment of the present invention;

FIG. 2A is a flow chart of a method performed by a well data mining and analysis system according to an exemplary methodology of the present invention;

FIG. 2B is a graph plotting (a) a histogram of average job pause time, (b) histogram of a normal score transformed average job pause time and (c) a cumulative probability distribution function of the normal score transformed average job pause time, according to an exemplary embodiment of the present invention;

FIG. 2C is a table containing a dataset having predictor variables and a response variable in accordance with an exemplary embodiment of the present invention; and

FIG. 2D is a regression tree modeled utilizing an exemplary embodiment of the present invention.

**DESCRIPTION OF ILLUSTRATIVE EMBODIMENTS**

Illustrative embodiments and related methodologies of the present invention are described below as they might be employed in a system for data mining and analysis of well data. In the interest of clarity, not all features of an actual implementation or methodology are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure. Further aspects and advantages of the various embodiments and related methodologies of the invention will become apparent from consideration of the following description and drawings.

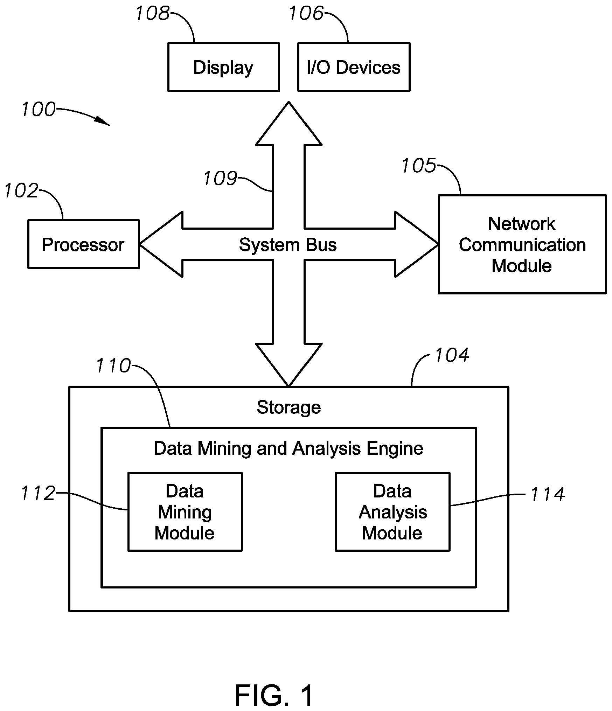

FIG. 1 shows a block diagram of well data mining and analysis ("WDMA") system 100 according to an exemplary embodiment of the present invention. As will be described herein, WDMA system 100 provides a platform in which to analyze a volume of wellbore-related data in order to determine those data variables which indicate or predict well performance. The database may include, for example, general well and job information, job level summary data, pumping schedule individual stage data including additives, wellbore and completion data, event logger data, formation data, and equipment data extracted from active disk image files. The present invention accesses the one or more databases to search the data and locate jobs in a particular location with associated details. The system then analyzes the data to extract information that may be availed for improved treatment of future wells, and the extracted data is then presented visually in a desired format. In other words, the system analyzes the data for patterns which may indicate future performance of a given well, and those data patterns are then presented visually for further application and/or analysis.

After system 100 has analyzed the data as described herein, attention may be drawn to a particular set of well jobs to, among other things, determine, based on the data output as described herein, if job pause time in a particular region is high, and if so, to determine whether the forgoing is due to a particular customer, service representative, or some other factor.

To achieve the foregoing objectives, as will be described herein, certain exemplary embodiments of WDMA system 100 analyze the wellbore-related data by applying a Classification and Regression Tree ("CART") methodology on desired datasets. In certain embodiments, the present invention improves the interpretation capability of trees by performing a Normal Score Transform ("NST") and/or a clustering technique on both discrete and continuous variables.

Referring to FIG. 1, WDMA system 100 includes at least one processor 102, a non-transitory, computer-readable storage 104, transceiver/network communication module 105, optional I/O devices 106, and an optional display 108 (e.g., user interface), all interconnected via a system bus 109. Software instructions executable by the processor 102 for implementing software instructions stored within data mining and analysis engine 110 in accordance with the exemplary embodiments described herein, may be stored in storage 104 or some other computer-readable medium.

Although not explicitly shown in FIG. 1, it will be recognized that WDMA system 100 may be connected to one or more public and/or private networks via one or more appropriate network connections. It will also be recognized that the software instructions comprising data mining and analysis engine 110 may also be loaded into storage 104 from a CD-ROM or other appropriate storage media via wired or wireless communication methods.

Moreover, those skilled in the art will appreciate that the present invention may be practiced with a variety of computer-system configurations, including hand-held devices, multiprocessor systems, microprocessor-based or programmable-consumer electronics, minicomputers, mainframe computers, and the like. Any number of computer-systems and computer networks are acceptable for use with the present invention. The invention may be practiced in distributed-computing environments where tasks are performed by remote-processing devices that are linked through a communications network. In a distributed-computing environment, program modules may be located in both local and remote computer-storage media including memory storage devices. The present invention may therefore, be implemented in connection with various hardware, software or a combination thereof in a computer system or other processing system.

Still referring to FIG. 1, in certain exemplary embodiments, data mining and analysis engine 110 comprises data mining module 112 and data analysis module 114. Data mining and analysis engine 110 provides a technical workflow platform that integrates various system components such that the output of one component becomes the input for the next component. In an exemplary embodiment, data mining and analysis engine 110 may be, for example, the AssetConnect™ software workflow platform commercially available through Halliburton Energy Services Inc. of Houston, Texas. As understood by those ordinarily skilled in the art having the benefit of this disclosure, database mining and analysis engine 110 provides an integrated, multi-user production engineering environment to facilitate streamlined workflow practices, sound engineering and rapid decision-making. In doing so, database mining and analysis engine 110 simplifies the creation of multi-domain workflows and allows integration of any variety of technical applications into a single workflow. Those same ordinarily skilled persons will also realize that other similar workflow platforms may be utilized with the present invention.

Serving as the database component of database mining and analysis engine 110, data mining module 112 is utilized by processor 102 to capture datasets for computation from a server database (not shown). In certain exemplary embodiments, the server database may be, for example, a local or remote SQL server which includes well job details, wellbore geometry data, pumping schedule data per stage, post job summaries, bottom-hole information, formation information, etc. As will be described herein, exemplary embodiments of the present invention utilize data mining module 112 to capture key variables from the database corresponding to different job IDs using server queries. After the data is extracted, data mining and analysis engine 110 communicates the dataset to data analysis module 114.

Data analysis module 114 is utilized by processor 102 to analyze the data extracted by data mining module 112. An exemplary data analysis platform may be, for example, Matlab®, as will be readily understood by those ordinarily skilled in the art having the benefit of this disclosure. As described herein, WDMA system 100, via data analysis module 114, analyzes the dataset to identify those data variables which indicate or predict well performance.

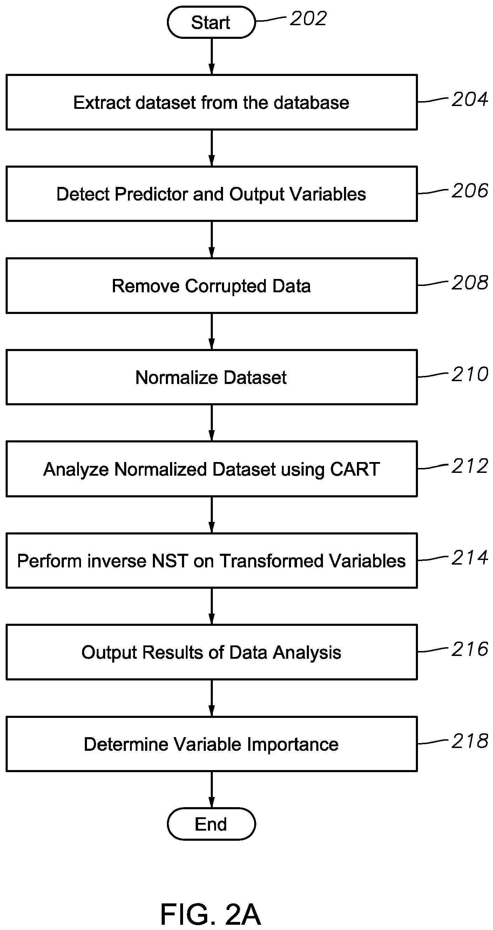

Referring to FIG. 2A, an exemplary methodology performed by the present invention will now be described. In this exemplary methodology, WDMA system 100 analyzes a dataset to predict certain characteristics (stimulation characteristics, for example) of a well. For example, WDMA system 100 may be utilized to predict if a particular job would experience a screen-out. As such, the following methodology will describe how WDMA system 100 mines and analyzes the data to determine what factors do and do not influence screen-out.

At block 202, WDMA system 100 initializes and displays a graphic user interface via display 108, the creation of which will be readily understood by ordinarily skilled persons having the benefit of this disclosure. Here, WDMA system 100 awaits entry of queries reflecting dataset extraction. In one exemplary embodiment, SQL queries may be utilized to specify the data to be extracted from the database. Such queries may include, for example, field location, reservoir name, name of the variables, further calculations required for new variables, etc. At block 204, once one or more queries have been detected by WDMA system 100, processor 102 instructs data mining module 112 to extract the corresponding dataset(s). Exemplary dataset variables may include, for example, average pressure, crew, pressures, temperatures, slurry volume, proppant mass, screen out, hydraulic power, etc. for a particular well.

At block 206, WDMA system 100 detects a user input that defines a response (i.e., output) variable $y$ and predictor (i.e., input) variables $x_i$ for $i = (1,...n)$, that are the subject of the analysis. As described herein, such selections may be made via a graphical user interface. Based upon a given response variable, a number of predictor variables are also chosen by the user. The predictor and response variables are selected from the data available in the dataset. For example, screen-out may be selected as the response variable, with predictor variables being engineer, customer, depth, average rate, clean volume, etc. The predictor variables may be categorical (engineer, customer, for example) or continuous (depth, clean volume, for example) in nature, and all values may be identified in standard oil-field units.

At block 208, WDMA system 100 performs pre-processing of the dataset in order to remove corrupted data. In certain exemplary embodiments, pre-processing of the dataset includes de-noising and/or removing outliers in the variables in order to provide a high quality dataset which will form the basis of the analysis. In an exemplary embodiment, outliers may be removed if they are characterized as values greater than three times the standard deviation, although other merit factors may be utilized. In addition, the data entered into the database may comprise incomplete or inconsistent data. Incomplete data may include NAN or NULL data, or data suffering from thoughtless entry. Noisy data may include data resulting from faulty collection or human error. Inconsistent data may include data having different formats or inconsistent names.

As previously described, certain exemplary embodiments of WDMA system 100 utilize a CART data analysis methodology. As understood in the art, classification or regression trees are produced by separating observations into subgroups by creating splits on predictors. These splits produce logical rules that are very comprehensible in nature. Once constructed, they may be applied on any sample size and are capable of handling missing values and may utilize both categorical and continuous variables as input variables.

Although CART is capable of handling missing values, inaccurate or erroneous entries can greatly affect the analysis. Even though CART is capable of accounting for outliers in the input variables $x_i$ for $i = (1,...n)$, it does not work well with outliers in the output variable $y$, as a few unusually high or low $y$ values may have a large influence on the mean of a particular node and, in-turn, produce high residual sum of squares that may lead to incorrect interpretation. In this exemplary embodiment, based on the assumption of normal distribution, outliers are characterized as those observations that deviate by more than three times the standard deviation from the mean, although other deviations may be utilized as would be understood by those ordinarily skilled in the art having the benefit of this disclosure. Therefore, at block 208, WDMA system 100 performs pre-processing of the dataset to remove outliers and other corrupted data. After WDMA system 100 removes the corrupted data, the dataset is ready for further analysis.

At block 210, WDMA system 100 normalizes the dataset using, for example, an NST methodology. As will be understood by ordinarily skilled persons having the benefit of this disclosure, CART interpretations may not be sensible when the output variable has a skewed distribution. In such cases, it becomes important to normalize the predictor and response variables before using them for interpretation using CART. Accordingly, certain exemplary embodiments of the present invention utilize NST to transform a dataset to resemble a standard normal distribution. Thus, at block 210, data mining and analysis engine 110 first ranks the original values $y_i$ for $i = (1,...,N)$ of the variable in order. In one preferred embodiment, the order is an ascending order. Next, the cumulative frequency, or $p_k$, quantile for the observation of rank $k$ is calculated using:

$$p_k = \sum_{i=1}^{k} w_i - 0.5 w_k \qquad \text{Eq. (1)}$$

where $w_k$ is the weight of the sample with rank $k$. If the weight of the data samples is not available, the default weight of $w_k = \dfrac{1}{N}$ is used.

The NST of the data sample with rank $k$ is the $p_k$ quantile of the standard normal distribution. Here:

$y_{\text{NST,k}} = G^{-1}(p_k)$, where $G(.)$ is the cumulative standard normal distribution.

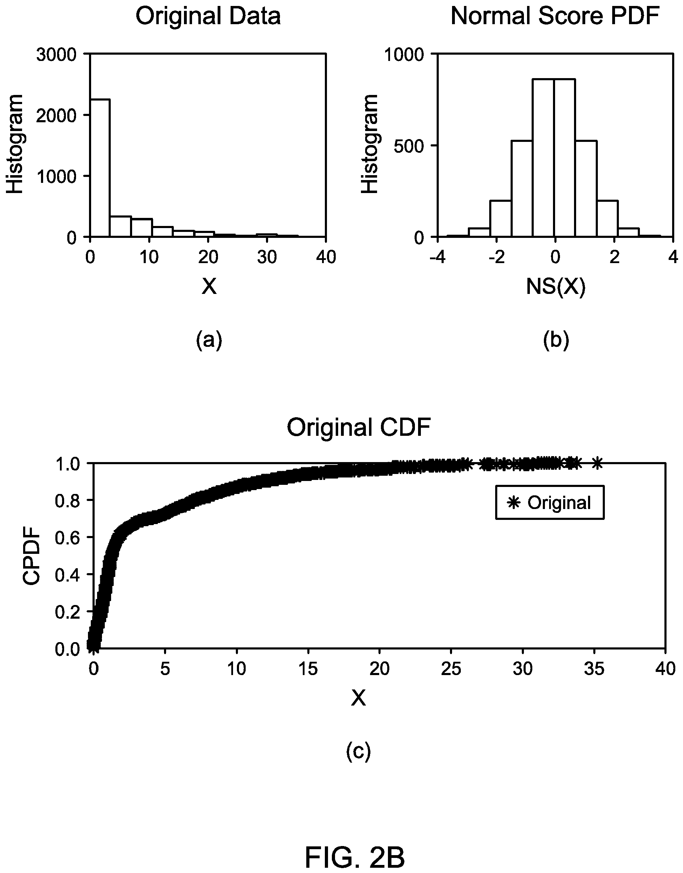

FIG. 2B illustrates the effects of the NST utilized by WDMA system 100 at block 210. Graph (a) plots a histogram of the average job pause time ("JPT") dataset which has not undergone NST. In this example, the variable is chosen to be average JPT since it was highly skewed (i.e., asymmetrical distribution) in this example. FIG. 2B illustrates distribution of the data where the x axis denotes the value of the variable and y axis denotes the number of data points that lie within a range of values shown in the x axis. Graph (b) plots a histogram of average JPT which has undergone NST (i.e., symmetrical distribution), while graph (c) plots a cumulative probability distribution function ("CPDF") of NST average JPT. The y axis is the cumulative frequency (calculated using Eq. (1)) of the samples shown in the x axis.

Referring back to FIG. 2A, at block 212, WDMA system 100 then applies CART to the dataset, based upon the defined output variable, in order to determine one or more predictor variables influencing the defined output variable. CART, also known as binary recursive partitioning, is a binary splitting process where parent nodes are split into two child nodes, thus creating "trees." The trees may be classification or regression trees. As will be described herein, classification trees may be utilized when the response variable is categorical (screen-out, for example), while regression trees may be utilized when the response variable is continuous in nature (JPT or hydraulic power, for example). The CART process is recursive in nature, where each child node becomes a parent to the new splitting nodes. In this exemplary embodiment, WDMA system 100 begins by finding one binary value or condition, such as an inquiry or question, which maximizes the information about the response variable, thus yielding one root node and two child nodes. Thereafter, WDMA system 100 then performs the same process at each child node by determining and analyzing the value or condition that results in the maximum information about the output variables, relative to the location in the tree.

In certain exemplary embodiments described herein, the splitting criteria for the regression or classification tree methodologies utilized by WDMA system 100 includes minimizing the mean squared error for the regression trees and utilizing Gini's diversity index, twoing or entropy for the classification trees. Such splitting criteria will be understood by those ordinarily skilled in the art having the benefit of this disclosure. Nevertheless, in certain exemplary embodiments, it is desirable to select an appropriate tree size, as tree information can become very complex in nature as it grows accounting for several questions at each node. Therefore, the present invention utilizes the NST of the dataset at block 210 in order to optimize the dataset before utilizing it for prediction, analysis or classification purposes.

In view of the foregoing, exemplary embodiments of the present invention determine the optimal tree size such that cross-validation error is minimized. In one exemplary embodiment to obtain a suitable size tree, WDMA system 100 may model an overly complex tree and then prune it back at block 212, as would be understood by those ordinarily skilled in the art having the benefit of this disclosure. Here, the residual error on the training data will decrease or remain the same with an increase in the depth of the tree; however, this does not guarantee low error on the testing data because the data is not used to build the model. In an alternative embodiment, WDMA system 100 may utilize cross-validation to decide on the optimal decision tree, as would also be understood by those same ordinarily skilled persons having the benefit of this disclosure. In cross-validation, optimal depth of the tree is obtained such that the resulting model is suitable for making predictions for the new dataset. In yet another exemplary embodiment, a user may define a maximum sample per node in order to limit the tree growth.

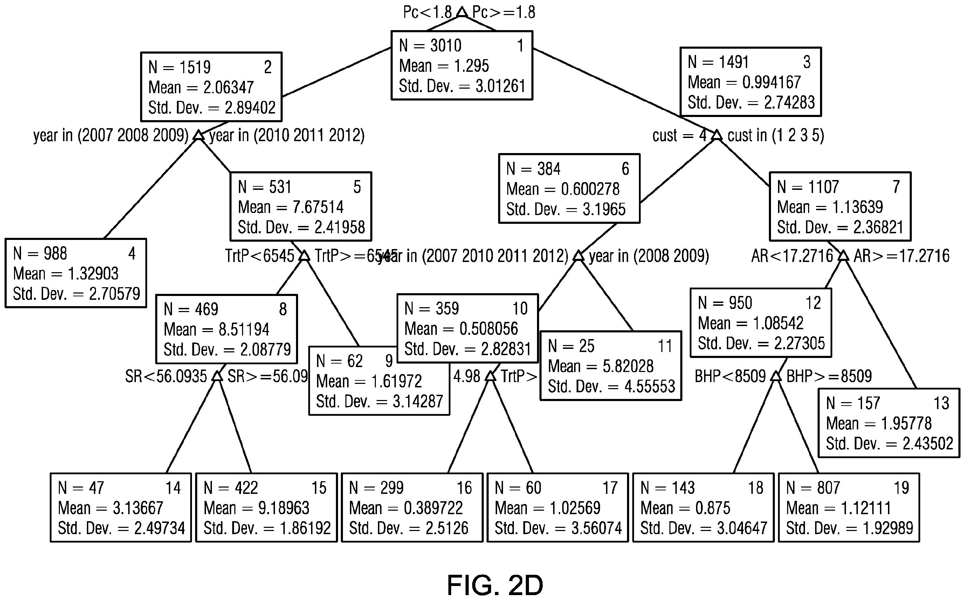

At block 214, after applying CART, WDMA system 100 then performs an inverse NST on the transformed dataset variables in order to transform them back into their original units for display in a classification or regression tree as shown in FIG. 2D, for example. In FIG. 2D, the regression tree has 1 root node (1), 8 internal nodes (5, 6, 7, 8, 9, 10, 11 and 12) and 8 terminal nodes (4, 14, 15, 16, 17, 18, 19 and 13). A text box present at each node provides information about that particular node. In this exemplary regression tree, the parent node shows that there are total 3010 observations with mean value of 1.295 and standard deviation of 3.01. The first splitting decision is made based on the proppant concentration. For proppant concentrations of less than 1.8, the tree proceeds to node 2, which reflects a higher mean of 2.06 as compared to node 3 for proppant concentrations of greater than or equal to 1.8 that has a lower mean of .99. Accordingly, the standard deviation is reduced per node which results in improved precision.

At block 216, WMDA system 100 outputs the results of the analysis. In this exemplary embodiment, the results are output in tree format. As such, a user may then perform visual analysis and/or event prediction. In other words, the tree may be utilized for two purposes. First, the tree may be utilized for prediction or classification of the output (i.e., response variable $y$) for a new set of input variables $x_i$ where $i = (1,...n)$ (i.e., once a model is developed, it may be utilized for prediction purposes on any number of samples). Second, in the case of visual analysis, the tree may be utilized by a user to understand the structural relationship between $y$ and $x_i$ variables to determine a list of logical questions which may be subsequently utilized to define predictor/output variables. Although described herein as a tree, WDMA system 100 may output the results as, for example, an earth model, plotted graph, two or three-dimensional image, etc., as would be understood by those ordinarily skilled in the art having the benefit of this disclosure.

Thereafter, at block 218, WDMA system 100 determines the importance of dataset variables. In determining variable importance, WDMA system 100 measures the contribution of a particular predictor variable in the tree formation. For classification and regression trees, WDMA system 100 computes the variable importance by summing the node error due to splits on every predictor (i.e., difference between the node error of the parent node and the two child nodes) and dividing the sum by the number of tree nodes. Node error is the mean square error in the case of regression trees and misclassification probability in case of classification trees, as would be understood by those ordinarily skilled in the art having the benefit of this disclosure. Table 1 below illustrates an exemplary ranking of exemplary predictor variables based upon their importance.

**Table 1: Ranking of predictor variables based on importance.**

| Variable | Importance |
|---|---|
| Customer | 4.37E-04 |
| Average Pressure | 3.99E-04 |
| Mass of proppant | 2.33E-04 |
| Engineer | 1.75E-04 |
| Depth | 7.49E-05 |
| Clean Volume | 6.77E-05 |
| Crew | 6.40E-05 |
| Average Rate | 5.98E-05 |

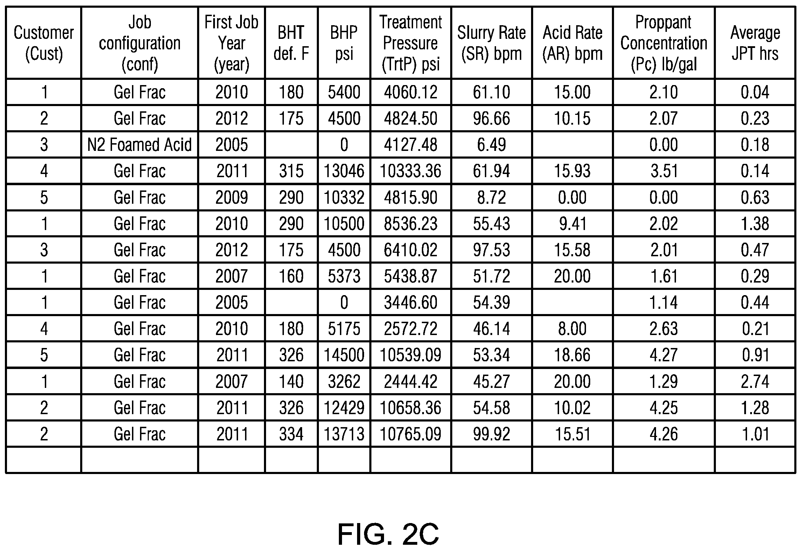

The effect of NST on the regression tree will now be illustrated utilizing an exemplary case study. Referring back to FIG. 2A, exemplary input and output variables of block 206 are shown in the chart of FIG. 2C. In this example, the dataset includes a variety of input predictor variables (e.g., BHT, slurry rate, etc.) and average JPT as a response variable. At block 208, rows containing any missing values of the continuous variables are removed from the dataset by WDMA system 100 since, in this embodiment, NST cannot be applied on the missing values. Then, at block 210, NST is performed by WDMA system 100 on all the continuous variables followed by the application of the CART methodology at block 212. After applying CART, variables are transformed back to the original units for display in the tree at block 214. FIG. 2D illustrates an exemplary tree which may be modeled and displayed via display 108 using this exemplary methodology. As described previously, again cross-validation is performed by WDMA system 100 to determine the optimal length of the tree based on the data utilized for the analysis, such as the tree shown in FIG. 2D.

Still referring to the exemplary case study, the tree illustrated in FIG. 2D is an optimal regression tree for the post NST average JPT with statistical information for each node shown in the text box. Comparing the optimal NST tree of FIG. 2D with a non-NST tree example, several differences were observed. First, the order of the variables was different in the NST tree. Second, the NST tree of FIG. 2D displays the median as the mean of the samples for each node's text box because in the NST domain, mean, mode and median are the same for the normally distributed variable. This results in a lower value of mean (as displayed in each node's text box) in the NST case as compared to the non-NST case. Third, the standard deviation was of a much lower magnitude in many nodes such as, for example, node 5, 8 and 15 in the NST tree, thus implying a lower uncertainty, which can be seen as an improvement over the non-NST case. Accordingly, as illustrated through this exemplary case study, through use of certain exemplary embodiments of the present invention, a variety of well datasets can be mined to locate data that can be availed for better stimulation treatment of future wells.

Referring back to FIG. 2A, certain examples not forming a part of the present invention perform a clustering technique on the dataset after performing the NST of block 210. In this example, Kernel $K$-means clustering is utilized, for example, in order to efficiently organize large amounts of data and to enable convenient access by users, as large datasets can impose practical limitations when analyzing the results of the CART analysis. In other words, applying CART to a large dataset can produce a tree, but prediction error can be large due to variations in the dataset. To combat this, however, certain examples not forming a part of the present invention divide large datasets into several small datasets (i.e., clusters or groups) and perform the CART analysis (block 212) for each cluster.

Visualization of data is an important feature of any data mining analysis. Once the dimension of the data is 3 or higher, human visualization of data becomes quite difficult. As such, certain exemplary embodiments of the present invention utilize Multidimensional Scaling ("MDS") at block 216 to enhance the analysis of WDMA system 100 with data visualization, as this technique reduces the dimension of the data for visualization purposes, as will be understood by those ordinarily skilled in the art having the benefit of this disclosure. In this exemplary embodiment, data analysis module 114 comprises the MDS functionality. For visualization purposes, WDMA system 100 utilizes Euclidean distance and, hence, calculates the symmetric Euclidean distance matrix $\theta \in \Re^{N \times N}$ (also known as dissimilarity matrix) where,

$$\mathbf{\theta}_{ij} = \sqrt{\left\| \theta_i - \theta_j \right\|_E} = \sqrt{\sum_{n=1}^{d} \left( \theta_{n,i} - \theta_{n,j} \right)^2} \qquad \text{Eq. (2)}$$

and $\theta_i \in \Re^d$, $i = j = 1....N$ represents data in NST domain.

Referring back to block 210, many of the large-scale conventional clustering techniques focus on grouping based on the Euclidean distance with the inherent assumption that all the data points lie in a nonlinear Euclidean domain. However, certain examples not forming a part of the present invention overcome this through utilization of the Kernel-based clustering method described herein by embedding the data points into a high-dimensional non-linear domain and defining their similarity using a nonlinear kernel distance function. Accordingly, through utilization of the foregoing clustering methodology in block 210 (after NST is performed), WDMA system 100 will generate any desired number of dataset clusters.

In an example not forming a part of the present invention, WDMA system 100 may perform this clustering technique without utilizing the NST of the dataset. In such an embodiment, after removing the corrupted data at block 208, WDMA system 100 will cluster the dataset at block 210, then proceed on to CART analysis of block 212. Likewise, in an alternative embodiment, any of the methodologies described herein may be conducted without removing the corrupted data. Those ordinarily skilled in the art having the benefit of this disclosure realize any variety of the features described herein may be combined as desired.

The effect of NST and clustering on the regression tree will now be illustrated utilizing another exemplary case study. In this example, a five-cluster output was selected using JPT, for example, as the response variable used to divide the datasets into clusters. Thereafter, trees were created and the clusters were plotted within a 3-dimensional view after performing *k*-means clustering on the post NST dataset. Thereafter, pruning was conducted as previously described herein. The resubstitution error for each cluster is summarized in Table 2 below.

**Table 2: Comparison in terms of prediction error**

| Cluster number | 1 | 2 | 3 | 4 | 5 |
|---|---|---|---|---|---|
| Samples in each cluster | 484 | 510 | 450 | 1317 | 249 |
| mean error with in cluster | 1.54 | 30.73 | 2.36 | 42.12 | 0.72 |
| mean error without cluster | 1.59 | 50.6 | 4.69 | 39.37 | 1.28 |
| total mean error with cluster | 24.23 | | | | |
| total mean error without cluster | 26.87 | | | | |
| Decrease in error (%) | 9.8 | | | | |

As expected, improvement was observed in the resubstitution error after performing clustering. For five clusters, the decrease in error was around 9.8%. Increasing numbers of clusters result in further decreased errors. For example, for 6 clusters it was found that there is a 14% decrease in error, and for 8 clusters it was around 18%.

As described herein, exemplary embodiments of the present invention provide system to data-mine and identify significant reservoir related variables (i.e., predictor variables) influencing a defined output variable, thus providing valuable insight into production enhancement and well stimulation/completion. The present invention is useful in its ability to parse the complex data into a series of If-Then-Else type questions involving important predictor variables. The system then presents the results in a simple, intuitive and easy to understand format that makes it a very efficient tool to handle any kind of data that includes categorical, continuous and missing values, which is particularly desirable in evaluation of hydrocarbon well data. In addition, the ability of the present invention to rank predictor variables based on their order of importance makes it equally competitive to stepwise regression, and the use of NST reduces the standard deviation in many nodes, thus yielding better interpretation capability. Moreover, CART performed after k-means clustering improves predictions related to the hydrocarbon well.

Although CART methodologies were described herein, other tree methods may also utilized such as, for example, Boosted Trees. Moreover, multivariate adaptive regression splines, neural networks or ensemble methods that combine a number of trees such as, for example, a tree bagging technique, may also be utilized herein, as will be readily understood by those ordinarily skilled in the art having the benefit of this disclosure.

The foregoing methods and systems described herein are particularly useful in planning, altering and/or drilling wellbores. As described, the system analyses well data to identify characteristics that indicate performance of a well.

Once identified, the data is presented visually using a tree or some other suitable form. This data can then be utilized to identify well equipment and/or develop a well workflow or stimulation plan. Thereafter, a wellbore is drilled, stimulated, altered and/or completed in accordance to those characteristics identified using the present invention.

Those of ordinary skill in the art will appreciate that, while exemplary embodiments and methodologies of the present invention have been described statically as part of implementation of a well placement or stimulation plan, the methods may also be implemented dynamically. Thus, a well placement or stimulation plan may be updated in real-time based upon the output of the present invention, such as for example, during drilling or drilling stimulation. Also, after implementing the well placement or stimulation plan, the system of the invention may be utilized during the completion process on the fly or iteratively to determine optimal well trajectories, fracture initiation points and/or stimulation design as wellbore parameters change or are clarified or adjusted. In either case, the results of the dynamic calculations may be utilized to alter a previously implemented well placement or stimulation plan.

An exemplary methodology of the present invention provides a computer-implemented method to analyze wellbore data, the method comprising extracting a dataset from a database, the dataset comprising wellbore data, detecting an output variable, removing corrupted data from the dataset, calculating a normal distribution for the dataset, thus creating a normalized dataset, performing a classification and regression tree ("CART") analysis on the normalized dataset based upon the output variable and based upon the CART analysis, determining one or more predictor variables that correlate to the output variable. Another exemplary method further comprises determining a contribution of the one or more predictor variables on the output variable and ranking the one or more predictor variables based on their influence on the output variable. In yet another method, calculating the normal distribution further comprises utilizing a Normal Score Transform to calculate the normal distribution of the dataset.

In another method, calculating the normal distribution further comprises performing a clustering technique on the normalized dataset. In yet another, determining one or more predictor variables further comprises displaying the one or more predictor variables utilizing a multidimensional scaling technique. Another methodology further comprises displaying the one or more predictor variables in the form of a tree or earth model. In yet another, determining the one or more predictor variables further comprises determining an optimal tree size. In another, determining the one or more predictor variables further comprises performing an inverse transformation on the normalized dataset. In yet another, a wellbore is drilled, completed or stimulated based on the determined one or more predictor variables.

Another exemplary methodology not forming a part of the present invention provides a computer-implemented method to analyze wellbore data, the method comprising extracting a dataset from a database, the dataset comprising wellbore data, detecting an output variable, removing corrupted data from the dataset, performing a clustering technique on the dataset, performing a classification and regression tree ("CART") analysis on the clustered dataset based upon the output variable and based upon the CART analysis, determining one or more predictor variables that correlate to the output variable. In another, performing the clustering technique further comprises normalizing the dataset. In yet another, a wellbore is drilled, completed or stimulated based on the determined one or more predictor variables.

An exemplary embodiment of the present invention provides a system to analyze wellbore data, the system comprising a processor and a memory operably connected to the processor, the memory comprising software instructions stored thereon that, when executed by the processor, causes the processor to perform a method comprising extracting a dataset from a database, the dataset comprising wellbore data, detecting an output variable, removing corrupted data from the dataset, calculating a normal distribution for the dataset, thus creating a normalized dataset, performing a classification and regression tree ("CART") analysis on the normalized dataset based upon the output variable and based upon the CART analysis, determining one or more predictor variables that correlate to the output variable. In another embodiment, calculating the normal distribution further comprises performing clustering on the normalized dataset. In yet another embodiment, a wellbore is drilled, completed or stimulated based on the determined one or more predictor variables.

Although various embodiments and methodologies have been shown and described, the invention is not limited to such embodiments and methodologies and will be understood to include all modifications and variations as would be apparent to one skilled in the art. For example, the invention as described herein may also be embodied in one or more systems comprising processing circuitry to perform the described mining and analysis, or may be embodied in a computer program product comprising instructions to perform the described mining and analysis. Therefore, the intention is to cover all modifications, equivalents and alternatives falling within the scope of the invention as defined by the appended claims.

**Claims**

1. A computer-implemented method to analyze wellbore data, the method comprising:

   extracting (204) a dataset from a database, the dataset comprising wellbore data of at least one well;

selecting (206) an output variable from the data available in the dataset;

removing (208) corrupted data from the dataset;

calculating (210) a normal distribution for the dataset, thus creating a normalized dataset;

performing (212) a classification and regression tree ("CART") analysis on the normalized dataset based upon the output variable; and

based upon the CART analysis on the normalized dataset, determining one or more predictor variables that correlate to the output variable for evaluating the performance of the well;

determining a contribution of the one or more predictor variables on the output variable;

ranking (218) the one or more predictor variables based on their influence on the output variable;

performing (214) an inverse transformation on the ranked one or more predictor variables of the normalized dataset in order to transform them back into their original units.

2. A computer-implemented method as defined in claim 1, wherein the step of calculating the normal distribution for the dataset (210) comprising wellbore data comprises utilizing a Normal Score Transform to calculate the normal distribution of the dataset.

3. A computer-implemented method as defined in claim 1, wherein the step of calculating the normal distribution for the dataset (210) comprising wellbore data comprises performing a clustering technique on the normalized dataset.

4. A computer-implemented method as defined in claim 1, wherein determining one or more predictor variables further comprises displaying the one or more predictor variables utilizing a multidimensional scaling technique.

5. A computer-implemented method as defined in claim 1, wherein determining the one or more predictor variables further comprises determining an optimal tree size such that cross-validation error is minimized by modeling a complex tree and then pruning it back.

6. A computer-implemented method as defined in claim 1, wherein a wellbore is drilled, completed or stimulated based on the determined one or more predictor variables utilized for identifying well equipment and/or developing a well workflow or stimulation plan for the wellbore.

7. A system (100) comprising processing circuitry to analyze wellbore data, the system (100) comprising:

a database mining and analysis engine (110) for extracting a dataset from a database, the dataset comprising wellbore data of at least one well;

the database mining and analysis engine (110) selecting an output variable from the data available in the dataset;

the database mining and analysis engine (110) removing corrupted data from the dataset;

the database mining and analysis engine (110) calculating a normal distribution for the dataset, thus creating a normalized dataset;

the database mining and analysis engine (110) performing a classification and regression tree ("CART") analysis on the normalized dataset based upon the output variable;

based upon the CART analysis on the normalized dataset, the database mining and analysis engine (110) determining one or more predictor variables that correlate to the output variable for evaluating the performance of the well;

the database mining and analysis engine (110) determining a contribution of the one or more predictor variables on the output variable;

the database mining and analysis engine (110) ranking the one or more predictor variables based on their influence on the output variable; and

the database mining and analysis engine (110) performing an inverse transformation on the ranked one or more predictor variables of the normalized dataset in order to transform them back into their original units.

8. A system (100) as defined in claim 7, wherein the system further comprises a display (108) and, after the database mining and analysis engine (110) determines one or more predictor variables, the display (108) displays the one or more predictor variables utilizing a multidimensional scaling technique.

9. A system (100) as defined in claim 7, wherein determining the one or more predictor variables further comprises determining an optimal tree size.

10. A system (100) as defined in claim 7, wherein a wellbore is drilled, completed or stimulated based on the ranked one or more predictor variables.

11. A computer program product comprising instructions to analyze wellbore data, the instructions which, when executed by at least one processor, causes the processor (102) to perform a method comprising:

extracting a dataset from a database, the dataset comprising wellbore data of at least one well;
selecting an output variable from the data available in the dataset;
removing corrupted data from the dataset;
calculating a normal distribution for the dataset, thus creating a normalized dataset;
performing a classification and regression tree ("CART") analysis on the normalized dataset based upon the output variable;
based upon the CART analysis on the normalized dataset, determining one or more predictor variables that correlate to the output variable for evaluating the performance of the well;
determining a contribution of the one or more predictor variables on the output variable;
ranking the one or more predictor variables based on their influence on the output variable; and
performing an inverse transformation on the ranked one or more predictor variables of the normalized dataset in order to transform them back into their original units.

**Patentansprüche**

1. Computerimplementiertes Verfahren zum Analysieren von Bohrlochdaten, wobei das Verfahren umfasst:

Extrahieren (204) eines Datensatzes aus einer Datenbank, wobei der Datensatz Bohrlochdaten von wenigstens einem Bohrloch umfasst;
Auswählen (206) einer Ausgabevariable aus den im Datensatz verfügbaren Daten;
Entfernen (208) von fehlerhaften Daten aus dem Datensatz;
Berechnen (210) einer Normalverteilung für den Datensatz, wodurch ein normalisierter Datensatz erzeugt wird;
Durchführen (212) einer Klassifikations- und Regressionsbaum ("CART")-Analyse an dem normalisierten Datensatz auf Grundlage der Ausgabevariable; und
Bestimmen auf Grundlage der CART-Analyse an dem normalisierten Datensatz einer oder mehrerer Prädiktorvariablen, die mit der Ausgabevariable korrelieren, zum Beurteilen der Leistung des Bohrlochs;
Bestimmen einer Verteilung der einen oder mehreren Prädiktorvariablen auf die Ausgabevariable;
Einstufen (218) der einen oder mehreren Prädiktorvariablen nach ihrem Einfluss auf die Ausgabevariable;
Durchführen (214) einer inversen Transformation an der einen oder den mehreren eingestuften Prädiktorvariablen des normalisierten Datensatzes, um sie zurück in ihre ursprünglichen Einheiten umzuwandeln.

2. Computerimplementiertes Verfahren nach Anspruch 1, wobei der Schritt des Berechnens der Normalverteilung für den Bohrlochdaten umfassenden Datensatz (210) Verwenden einer Normaltransformation zum Berechnen der Normalverteilung des Datensatzes umfasst.

3. Computerimplementiertes Verfahren nach Anspruch 1, wobei der Schritt des Berechnens der Normalverteilung für den Bohrlochdaten umfassenden Datensatz (210) Durchführen einer Clusterbildungstechnik an dem normalisierten Datensatz umfasst.

4. Computerimplementiertes Verfahren nach Anspruch 1, wobei das Bestimmen einer oder mehrerer Prädiktorvariablen ferner Darstellen der einen oder mehreren Prädiktorvariablen unter Verwendung einer multidimensionalen Skalierungstechnik umfasst.

5. Computerimplementiertes Verfahren nach Anspruch 1, wobei das Bestimmen der einen oder mehreren Prädiktorvariablen ferner Bestimmen einer optimalen Baumgröße derart, dass ein Kreuzvalidierungsfehler minimiert wird, durch Modellieren eines komplexen Baumes und dann Kürzen davon umfasst.

6. Computerimplementiertes Verfahren nach Anspruch 1, wobei ein Bohrloch auf Grundlage der bestimmten einen oder mehreren Prädiktorvariablen gebohrt, komplettiert oder stimuliert wird, die zum Identifizieren von Bohrlochausrüstung und/oder Entwickeln eines Bohrlochablaufs oder Stimulationsplans für das Bohrloch verwendet werden.

7. System (100), umfassend Verarbeitungsschaltungen zum Analysieren von Bohrlochdaten, wobei das System (100) umfasst:

eine Datenbank-Mining- und Analysemaschine (110) zum Extrahieren eines Datensatzes aus einer Datenbank, wobei der Datensatz Bohrlochdaten von wenigstens einem Bohrloch umfasst;

wobei die Datenbank-Mining- und Analysemaschine (110) eine Ausgabevariable aus den im Datensatz verfügbaren Daten auswählt;

wobei die Datenbank-Mining- und Analysemaschine (110) fehlerhafte Daten aus dem Datensatz entfernt;

wobei die Datenbank-Mining- und Analysemaschine (110) eine Normalverteilung für den Datensatz berechnet, wodurch ein normalisierter Datensatz erzeugt wird;

wobei die Datenbank-Mining- und Analysemaschine (110) eine Klassifikations- und Regressionsbaum("CART")-Analyse an dem normalisierten Datensatz auf Grundlage der Ausgabevariable durchführt;

wobei die Datenbank-Mining- und Analysemaschine (110) auf Grundlage der CART-Analyse an dem normalisierten Datensatz eine oder mehrere Prädiktorvariablen, die mit der Ausgabevariable korrelieren, zum Beurteilen der Leistung des Bohrlochs bestimmt;

wobei die Datenbank-Mining- und Analysemaschine (110) eine Verteilung der einen oder mehreren Prädiktorvariablen auf die Ausgabevariable bestimmt;

wobei die Datenbank-Mining- und Analysemaschine (110) die eine oder mehreren Prädiktorvariablen nach ihrem Einfluss auf die Ausgabevariable einstuft; und

wobei die Datenbank-Mining- und Analysemaschine (110) eine inverse Transformation an der einen oder den mehreren eingestuften Prädiktorvariablen des normalisierten Datensatzes durchführt, um sie zurück in ihre ursprünglichen Einheiten umzuwandeln.

8. System (100) nach Anspruch 7, wobei das System ferner eine Anzeige (108) umfasst und die Anzeige (108), nachdem die Datenbank-Mining- und Analysemaschine (110) eine oder mehrere Prädiktorvariablen bestimmt hat, die eine oder mehreren Prädiktorvariablen unter Verwendung einer multidimensionalen Skalierungstechnik darstellt.

9. System (100) nach Anspruch 7, wobei das Bestimmen der einen oder mehreren Prädiktorvariablen ferner Bestimmen einer optimalen Baumgröße umfasst.

10. System (100) nach Anspruch 7, wobei ein Bohrloch auf Grundlage der einen oder mehreren eingestuften Prädiktorvariablen gebohrt, komplettiert oder stimuliert wird.

11. Computerprogrammprodukt, umfassend Anweisungen zum Analysieren von Bohrlochdaten, wobei die Anweisungen bei Ausführung durch wenigstens einen Prozessor den Prozessor (102) dazu veranlassen, ein Verfahren durchzuführen, umfassend:

Extrahieren eines Datensatzes aus einer Datenbank, wobei der Datensatz Bohrlochdaten von wenigstens einem Bohrloch umfasst;

Auswählen einer Ausgabevariable aus den im Datensatz verfügbaren Daten;

Entfernen von fehlerhaften Daten aus dem Datensatz;

Berechnen einer Normalverteilung für den Datensatz, wodurch ein normalisierter Datensatz erzeugt wird;

Durchführen einer Klassifikations- und Regressionsbaum ("CART")-Analyse an dem normalisierten Datensatz auf Grundlage der Ausgabevariable;

Bestimmen auf Grundlage der CART-Analyse an dem normalisierten Datensatz einer oder mehrerer Prädiktorvariablen, die mit der Ausgabevariable korrelieren, zum Beurteilen der Leistung des Bohrlochs;

Bestimmen einer Verteilung der einen oder mehreren Prädiktorvariablen auf die Ausgabevariable;

Einstufen der einen oder mehreren Prädiktorvariablen nach ihrem Einfluss auf die Ausgabevariable; und

Durchführen einer inversen Transformation an der einen oder den mehreren eingestuften Prädiktorvariablen des normalisierten Datensatzes, um sie zurück in ihre ursprünglichen Einheiten umzuwandeln.

**Revendications**

1. Procédé mis en oeuvre par ordinateur pour analyser des données de puits de forage, le procédé comprenant :

l'extraction (204) d'un ensemble de données à partir d'une base de données, l'ensemble de données comprenant des données de puits de forage d'au moins un puits ;

la sélection (206) d'une variable de sortie à partir des données disponibles dans l'ensemble de données ;

la suppression (208) de données corrompues de l'ensemble de données ;

le calcul (210) d'une distribution normale pour l'ensemble de données, créant ainsi un ensemble de données normalisé ;

la réalisation (212) d'une analyse d'arbre de classification et de régression (« CART ») de l'ensemble de données normalisé sur la base de la variable de sortie ; et

sur la base de l'analyse CART de l'ensemble de données normalisé, la détermination d'une ou de plusieurs variables de prédiction qui sont corrélées à la variable de sortie pour évaluer la performance du puits ;

la détermination d'une contribution des une ou plusieurs variables de prédiction sur la variable de sortie ;

le classement (218) des une ou plusieurs variables de prédiction sur la base de leur influence sur la variable de sortie ;

la réalisation (214) d'une transformation inverse sur les une ou plusieurs variables de prédiction classées de l'ensemble de données normalisé afin de les retransformer dans leurs unités d'origine.

2. Procédé mis en oeuvre par ordinateur selon la revendication 1, dans lequel l'étape de calcul de la distribution normale pour l'ensemble de données (210) comprenant des données de puits de forage comprend l'utilisation d'une transformation du score normal pour calculer la distribution normale de l'ensemble de données.

3. Procédé mis en oeuvre par ordinateur selon la revendication 1, dans lequel l'étape de calcul de la distribution normale pour l'ensemble de données (210) comprenant des données de puits de forage comprend la réalisation d'une technique de groupement sur l'ensemble de données normalisé.

4. Procédé mis en oeuvre par ordinateur selon la revendication 1, dans lequel la détermination d'une ou de plusieurs variables de prédiction comprend en outre l'affichage des une ou plusieurs variables de prédiction en utilisant une technique d'analyse multidimensionnelle.

5. Procédé mis en oeuvre par ordinateur selon la revendication 1, dans lequel la détermination des une ou plusieurs variables de prédiction comprend en outre la détermination d'une taille d'arbre optimale de sorte qu'une erreur de validation croisée est minimisée en modélisant un arbre complexe et en l'élaguant ensuite.

6. Procédé mis en oeuvre par ordinateur selon la revendication 1, dans lequel un puits de forage est foré, complété ou stimulé sur la base des une ou plusieurs variables de prédiction déterminées utilisées pour identifier un équipement de puits et/ou développer un plan de flux de travail ou de stimulation de puits pour le puits de forage.

7. Système (100) comprenant des circuits de traitement pour analyser des données de puits de forage, le système (100) comprenant :

un moteur d'exploration et d'analyse de base de données (110) pour extraire un ensemble de données à partir d'une base de données, l'ensemble de données comprenant des données de puits de forage d'au moins un puits ;

le moteur d'exploration et d'analyse de base de données (110) sélectionnant une variable de sortie à partir des données disponibles dans l'ensemble de données ;

le moteur d'exploration et d'analyse de base de données (110) supprimant des données corrompues de l'ensemble de données ;

le moteur d'exploration et d'analyse de base de données (110) calculant une distribution normale pour l'ensemble de données, créant ainsi un ensemble de données normalisé ;

le moteur d'exploration et d'analyse de base de données (110) effectuant une analyse d'arbre de classification et de régression (« CART ») de l'ensemble de données normalisé sur la base de la variable de sortie ;

sur la base de l'analyse CART de l'ensemble de données normalisé, le moteur d'exploration et d'analyse de base de données (110) déterminant une ou plusieurs variables de prédiction qui sont corrélées à la variable de sortie pour évaluer la performance du puits ;

le moteur d'exploration et d'analyse de base de données (110) déterminant une contribution des une ou plusieurs variables de prédiction sur la variable de sortie ;

le moteur d'exploration et d'analyse de base de données (110) classant les unes ou plusieurs variables de prédiction sur la base de leur influence sur la variable de sortie ; et

le moteur d'exploration et d'analyse de base de données (110) effectuant une transformation inverse sur les une ou plusieurs variables de prédiction classées de l'ensemble de données normalisé afin de les retransformer dans leurs unités d'origine.

8. Système (100) selon la revendication 7, dans lequel le système comprend en outre un dispositif d'affichage (108) et, après la détermination par le moteur d'exploration et d'analyse de base de données (110) d'une ou de plusieurs variables de prédiction, le dispositif d'affichage (108) affiche les une ou plusieurs variables de prédiction en utilisant une technique d'analyse multidimensionnelle.

9. Système (100) selon la revendication 7, dans lequel la détermination des une ou plusieurs variables de prédiction comprend en outre la détermination d'une taille d'arbre optimale.

10. Système (100) selon la revendication 7, dans lequel un puits de forage est foré, complété ou stimulé sur la base des une ou plusieurs variables de prédiction classées.

11. Produit de programme informatique comprenant des instructions pour analyser des données de puits de forage, les instructions qui, lorsqu'elles sont exécutées par au moins un processeur, amènent le processeur (102) à exécuter un procédé comprenant :

l'extraction d'un ensemble de données à partir d'une base de données, l'ensemble de données comprenant des données de puits de forage d'au moins un puits ;
la sélection d'une variable de sortie à partir des données disponibles dans l'ensemble de données ;
la suppression de données corrompues de l'ensemble de données ;
le calcul d'une distribution normale pour l'ensemble de données, créant ainsi un ensemble de données normalisé ;
la réalisation d'une analyse d'arbre de classification et de régression (« CART ») de l'ensemble de données normalisé sur la base de la variable de sortie ;
sur la base de l'analyse CART de l'ensemble de données normalisé, la détermination d'une ou de plusieurs variables de prédiction qui sont corrélées à la variable de sortie pour évaluer la performance du puits ;
la détermination d'une contribution des une ou plusieurs variables de prédiction sur la variable de sortie ;
le classement des une ou plusieurs variables de prédiction sur la base de leur influence sur la variable de sortie ; et
la réalisation d'une transformation inverse sur les une ou plusieurs variables de prédiction classées de l'ensemble de données normalisé afin de les retransformer dans leurs unités d'origine.

FIG. 1

FIG. 2A

FIG. 2B

| Customer (Cust) | Job configuration (conf) | First Job Year (year) | BHT def. F | BHP psi | Treatment Pressure (TrtP) psi | Slurry Rate (SR) bpm | Acid Rate (AR) bpm | Proppant Concentration (Pc) lb/gal | Average JPT hrs |
|---|---|---|---|---|---|---|---|---|---|
| 1 | Gel Frac | 2010 | 180 | 5400 | 4060.12 | 61.10 | 15.00 | 2.10 | 0.04 |
| 2 | Gel Frac | 2012 | 175 | 4500 | 4824.50 | 96.66 | 10.15 | 2.07 | 0.23 |
| 3 | N2 Foamed Acid | 2005 | | 0 | 4127.48 | 6.49 | | 0.00 | 0.18 |
| 4 | Gel Frac | 2011 | 315 | 13046 | 10333.36 | 61.94 | 15.93 | 3.51 | 0.14 |
| 5 | Gel Frac | 2009 | 290 | 10332 | 4815.90 | 8.72 | 0.00 | 0.00 | 0.63 |
| 1 | Gel Frac | 2010 | 290 | 10500 | 8536.23 | 55.43 | 9.41 | 2.02 | 1.38 |
| 3 | Gel Frac | 2012 | 175 | 4500 | 6410.02 | 97.53 | 15.58 | 2.01 | 0.47 |
| 1 | Gel Frac | 2007 | 160 | 5373 | 5438.87 | 51.72 | 20.00 | 1.61 | 0.29 |
| 1 | Gel Frac | 2005 | | 0 | 3446.60 | 54.39 | | 1.14 | 0.44 |
| 4 | Gel Frac | 2010 | 180 | 5175 | 2572.72 | 46.14 | 8.00 | 2.63 | 0.21 |
| 5 | Gel Frac | 2011 | 326 | 14500 | 10539.09 | 53.34 | 18.66 | 4.27 | 0.91 |
| 1 | Gel Frac | 2007 | 140 | 3262 | 2444.42 | 45.27 | 20.00 | 1.29 | 2.74 |
| 2 | Gel Frac | 2011 | 326 | 12429 | 10658.36 | 54.58 | 10.02 | 4.25 | 1.28 |
| 2 | Gel Frac | 2011 | 334 | 13713 | 10765.09 | 99.92 | 15.51 | 4.26 | 1.01 |
| | | | | | | | | | |

FIG. 2C

Pc<1.8 △ Pc>=1.8

```
N = 3010        1
Mean = 1.295
Std. Dev. = 3.01261
```

```
N = 1519        2
Mean = 2.06347
Std. Dev. = 2.89402
```

```
N = 1491        3
Mean = 0.994167
Std. Dev. = 2.74283
```

year in (2007 2008 2009) △ year in (2010 2011 2012)

cust = 4 △ cust in (1 2 3 5)

```
N = 531         5
Mean = 7.67514
Std. Dev. = 2.41958
```

```
N = 384         6
Mean = 0.600278
Std. Dev. = 3.1965
```

```
N = 1107        7
Mean = 1.13639
Std. Dev. = 2.36821
```

```
N = 988         4
Mean = 1.32903
Std. Dev. = 2.70579
```

TrtP<6545 △ TrtP>=6545 year in (2007 2010 2011 2012) △ year in (2008 2009)

AR<17.2716 △ AR>=17.2716

```
N = 469         8
Mean = 8.51194
Std. Dev. = 2.08779
```

```
N = 359         10
Mean = 0.508056
Std. Dev. = 2.82831
```

```
N = 25          11
Mean = 5.82028
Std. Dev. = 4.55553
```

```
N = 950         12
Mean = 1.08542
Std. Dev. = 2.27305
```

```
N = 62          9
Mean = 1.61972
Std. Dev. = 3.14287
```

SR<56.0935 △ SR>=56.09

4.98 △ TrtP>

BHP<8509 △ BHP>=8509

```
N = 157         13
Mean = 1.95778
Std. Dev. = 2.43502
```

```
N = 47          14
Mean = 3.13667
Std. Dev. = 2.49734
```

```
N = 422         15
Mean = 9.18963
Std. Dev. = 1.86192
```

```
N = 299         16
Mean = 0.389722
Std. Dev. = 2.5126
```

```
N = 60          17
Mean = 1.02569
Std. Dev. = 3.56074
```

```
N = 143         18
Mean = 0.875
Std. Dev. = 3.04647
```

```
N = 807         19
Mean = 1.12111
Std. Dev. = 1.92989
```

FIG. 2D

**EP 2 909 656 B1**

**Patent documents cited in the description**

- WO 20120123756 A1